# EUROPÄISCHE PATENTSCHRIFT

(11) **EP 0 718 470 B1**
(45) Veröffentlichungstag und Bekanntmachung des Hinweises auf die Patenterteilung: **14.08.2002**
(21) Anmeldenummer: 95810762.5
(22) Anmeldetag: 05.12.1995
(51) Int. Cl.: F01D 21/00, F02C 9/28, F02C 9/20, F02K 3/08

(54) **Verfahren zum Betrieb einer Gasturbogruppe**
Method of operation of a gas turbine
Procédé d'opération d'une turbine à gaz

(30) Priorität: 24.12.1994 DE 4446610
(43) Veröffentlichungstag der Anmeldung: 26.06.1996
(73) Patentinhaber: Alstom, 75116 Paris (FR)
(72) Erfinder: Kamber, Peter, Simsbury, CT 06070 (US); Lindvall, Anders, CH-5401 Baden (CH); Rufli, Peter, Dr., CH-5442 Fislisbach (CH)
(74) Vertreter: Liebe, Rainer

(56) Entgegenhaltungen:
- EP-A- 0 304 827
- DE-A- 2 830 724
- DE-A- 3 422 210
- US-A- 5 454 220

## Beschreibung

### Technisches Gebiet

Die vorliegende Erfindung betrifft ein Verfahren gemäss Oberbegriff des Anspruchs 1.

### Stand der Technik

Es ist bekanntgeworden, die Teillast beim Betrieb von Gasturbogruppen über eine Verminderung der Brennstoffmenge zu bewerkstelligen, indem durch eine solche Verminderung und Beibehaltung der verbrennungsluft die Eintritts-Temperatur in die Turbine abgesenkt wird. Diese an sich einfache Erstellung eines Teillastbetriebes erweist sich hinsichtlich des Wirkungsgrades als zu wenig attraktiv, sinkt doch dieser beinahe proportional zur Leistungsreduktion ab. Im Bestreben diese relativ hohe Wirkungsgradseinbusse in engeren Grenzen zu halten, ist beispielsweise schon vorgeschlagen worden, die Absenkung der Last zusätzlich durch eine Verstellung der Verdichter-Leitschaufeln zu unterstützen.

Indessen, bei einer Gasturbogruppe mit einer sequentiellen Verbrennung, bei welcher die in einer ersten Brennkammer bereitgestellten Heissgase eine erste Turbine beaufschlagen, die hieraus abströmenden Abgase in einer zweiten Brennkammer nochmals zu Heissgasen aufbereitet werden, welche dann eine zweite Turbine beaufschlagen, sind die Anforderungen zur Erstellung eines Teillastbetriebes bei maximiertem Wirkungsgrad mit den bekanntgewordenen Methoden nicht mehr zu bewerkstelligen; dies umso mehr, wenn die zweite Brennkammer auf Selbstzündung ausgelegt ist, d.h., wenn die Temperatur der Abgase aus der ersten Turbine eine Selbstzündung im Zusammenhang mit dem dort eingedüsten Brennstoff ermöglichen muss.

Bei einer solchen Gasturbogruppe, aber nicht nur, liesse sich zwar durch Schliessen der Vorleitreihe des Verdichters eine Absenkung der Leistung erzielen. Dies würde aber unweigerlich ein Hinunterfahren der eingedüsten Brennstoffmenge in die beiden Brennkammern der Gasturbogruppe bedingen. Ist nun die zweite Brennkammer auf Selbstzündung ausgelegt, so können die Brennstoffmengen nicht gleichzeitig bei beiden Brennkammern reduziert werden, denn dann liesse sich die Temperatur der Abgase aus der ersten Turbine für die nachfolgende Selbstzündung in der zweiten Brennkammer nicht mehr aufrechterhalten.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art eine Regelmethode vorzuschlagen, welche durch ein einfaches Regelkonzept eine sichere Absenkung der Last bei maximiertem Wirkungsgrad und minimierten Schadstoff-Emissionen, insbesondere was die NOX- und CO-Emissionen betrifft, unter Berücksichtigung, dass die Gasturbogruppe eine sequentielle Verbrennung aufweist.

Der wesentliche Vorteil der Erfindung ist darin zu sehen, dass die ganze Lastabsenkung bei maximiertem Teillast-Wirkungsgrad abläuft, wobei bei der Einleitung der Lastabsenkung vorweg auf die Eintritts-Temperatur in die beiden Turbinen eingegriffen wird, dergestalt, dass dadurch eine Sicherheit geschaffen wird, um ein durch Regeleinflüsse bedingtes Ueberschwingen der Temperaturen schadlos auffangen zu können.

Dieser Temperatureingriff bei der Einleitung der Lastabsenkung bedingt freilich, dass die in der zweiten Brennkammer auf Selbstzündung ausgelegte Temperatur nicht unterhalb des zum Betrieb benötigten Niveaus sinkt.

Die Verstellung der Verdichter-Leitschaufeln steht in Wirkverbindung mit der Brennstoff-Regelung bei der Lastabsenkung, wobei diese Brennstoff-Regelung wiederum in Abhängigkeit zum abnehmenden Massenstrom aus der Verstellung der Verdichter-Leitschaufeln steht.

Die Wirkverbindung zwischen Verstellung der Verdichter-Leitschaufeln und Brennstoff-Regulierung eröffnet vorteilhafte Möglichkeiten bei der Regelung einer solchen Gasturbogruppe:

Bei einer Ausgangslage von einer Last von 100%, welche der Nominal-Temperatur am Eintritt in die beiden Turbinen und der Nominalöffnung der Verdichter-Leitschaufeln entspricht, wird die Last um wenige Prozente zurückgenommen, entsprechend einer Temperaturabsenkung um die 20°C. Bei diesem ersten Eingriff geht es darum, einen Sicherheitsabstand gegenüber der 100%-Last zu schaffen, damit allfällige nachgehende Brennstoff-Regelungen oder sonstige Eingriffe nicht eine Ueberschwingung der Temperaturen verursachen. Diese Fixierung wird aufgrund der maximal zugrundegelegten Temperatur der Abgase aus der zweiten Turbine festgelegt, die gemäss Vorgabe 620-640°C beträgt. Danach werden die Verdichter-Leitschaufeln sukzessiv geschlossen, bis unter 50% der Nennlast, wobei bei dieser Regelung die Temperatur am Eintritt in die erste Turbine auf dem reduzierten Niveau gegenüber der Temperatur bei Nennlast gehalten wird. Die Eintrittstemperatur in die zweite Turbine reduziert sich kontinuierlich, wobei sichergestellt wird, dass die Temperatur am Austritt dieser zweiten Turbine die obengenannte Vorgabe nicht überschreitet. Damit sich der neue Regelungsstand aus den vorangegangenen Eingriffen einstellen kann, müssen die Brennstoffmengen in die einzelnen Brennkammern passend zurückgenommen werden, weil der Massenstrom durch die Verstellung der Verdichter-Leitschaufeln laufend abnimmt. Nach Beendigung der Verstellung der Verdichter-Leitschaufeln wird die Eintritts-Temperatur in die erste Turbine noch eine Zeitlang auf dem vorgegebenen Niveau konstant gehalten, während die Eintritts-Temperatur in die zweite Turbine Kontinuierlich nach unten gefahren wird. Sobald die verbleibende Last von der zweiten Turbine ca. zur Hälfte abgefahren ist, fährt man mit der Eintritts-Temperatur in die erste Turbine durch entsprechende Absenkung der Brennstoffmenge ebenfalls kontinuierlich nach unten.

Zur weiteren Absicherung des Betriebes der selbstzündenden Brennkammer kann eine Temperaturmessung am Ausgang der ersten Turbine vorgesehen werden, welche eine Information bereitstellt, um allenfalls auf die Brennstoffmenge für die zweite Brennkammer einzuwirken.

Ist die Gasturbogruppe mit einem nachgeschalteten Dampfkreislauf im Sinne einer Kombianlage ergänzt, so kann nach abschliessender Verstellung der Verdichter-Leitschaufeln durch Vorwärmung der Ansaugluft zum Verdichter mit Hilfe von Entnahmedampf aus dem genannten Dampfkreislauf die Last weiter mit hohem Wirkungsgrad abgesenkt werden.

Vorteilhafte und zweckmässige Weiterbildungen der erfindungsgemässen Aufgabenlösung sind in den weiteren abhängigen Ansprüchen gekennzeichnet.

Im folgenden wird anhand der Zeichnung ein Ausführungsbeispiel der Erfindung näher erläutert. Alle für das unmittelbare Verständnis der Erfindung unwesentlichen Merkmale sind fortgelassen. In den verschiedenen Figuren sind gleiche Elemente mit den gleichen Bezugszeichen versehen. Die Strömungsrichtung der Medien ist mit Pfeilen angegeben.

### Kurze Beschreibung der Zeichnungen

Es zeigt:
- Fig. 1: eine Gasturbogruppe mit sequentieller Verbrennung und
- Fig. 2: eine Regelmethode zur Absenkung der Last.

### Wege zur Ausführung der Erfindung, gewerbliche Verwertbarkeit

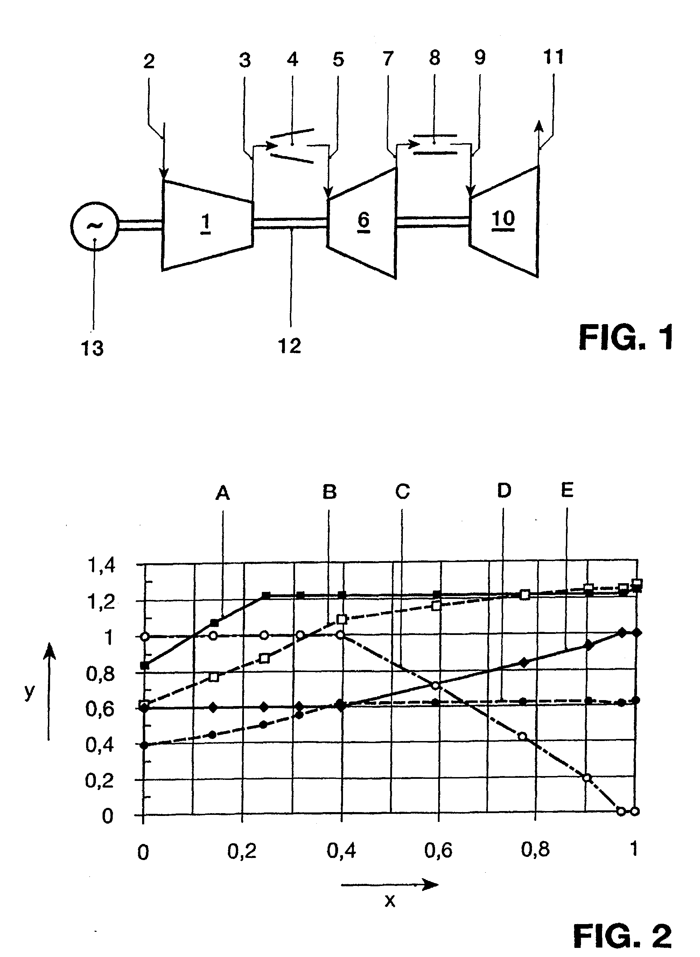

Fig. 1 zeigt eine Gasturbogruppe mit sequentieller Verbrennung. Diese Gasturbogruppe besteht aus einem Verdichter 1, oder einer mit einer Zwischenkühlung ausgestattenen Verdichtereinheit, in welchem die Kompression der angesaugte Luft 2 stattfindet. Die verdichtete Luft 3 strömt sodann in eine erste Brennkammer 4, auch Hochdruck-Brennkammer = HD-Brennkammer genannt, in welcher die Bereitstellung von Heissgasen 5 anhand eines eingedüsten Brennstoffes stattfindet, wobei diese Brennkammer vorzugsweise mit Brennern betrieben wird, wie sie aus EP-0 321 809 hervorgehen. Stromab dieser HD-Brennkammer 4 operiert eine erste Turbine 6, auch Hochdruck-Turbine = HD-Turbine genannt, in welcher die Heissgase 5 eine Teilentspannung erfahren. Diese Teilentspannung ist dadurch charakterisiert, dass die Abgase 7 aus der HD-Turbine 6 noch eine relativ hohe Temperatur aufweisen, dies in der Grössenordnung um 950°C und mehr, dementsprechend besteht die Beschaufelung dieser HD-Turbine 6 aus wenigen Laufschaufelreihen, vorzugsweise 1 bis 3 Stufen. Stromab der HD-Turbine wirkt eine zweite Brennkammer 8, auch Niederdruck-Brennkammer = HD-Brennkammer genannt, welche nach einem Selbstzündungsprinzip operiert. Diese ND-Brennkammer 8 hat vorzugsweise die Form eines durchströmten Ringkanals, in welchen ein Brennstoff eingedüst wird, der im Zusammenhang mit der vorbestimmten Temperatur die Voraussetzungen für eine Selbstzündung bildet. Bei einer Temperatur der Abgase 7 aus der HD-Turbine 6 auf obengenanntem Niveau findet beim Einsatz eines gasförmigen Brennstoffes zwangsläufig eine Selbstzündung statt. Diese ND-Brennkammer 8 weist des weiteren nicht dargestellte Wirbel-Generatoren auf, welche vorzugsweise stromauf der Eindüsung des Brennstoffes angeordnet sind, und welche im Bereich der Flammenfront eine Rückströmzone zur Gewährleistung eines sicheren Betriebes bilden. Die Abgase 7 werden somit in der ND-Brennkammer 8 wieder zu Heissgasen 9 aufbereitet, deren Temperatur in etwa derjenigen der HD-Brennkammer 4 entspricht. Grundsätzlich weisen die Temperaturen der Heissgasen 5, 9 keine unmittelbare brennkammerbedingte Grenze auf; diese Grenze wird vielmehr und zunächst von der jeweiligen zu beaufschlagenden Turbine und den entsprechenden Maschinenelementen vorgegeben. Die Heissgase 9 beaufschlagen sodann eine zweite Turbine, auch Niederdruck-Turbine = ND-Turbine genannt, in welcher die engültige Entspannung stattfindet. Das kalorische Remanenzpotential der Rauchgase 11 kann beispielsweise zur Dampferzeugung eines nicht gezeigten und nachgeschalteten Dampfkreislaufes eingesetzt werden. Ein wesentlicher Merkmal der gezeigten Gasturbogruppe ist die einheitliche Lagerung aller Strömungsmaschinen 1, 6, 10 auf einer Welle 12, welche vorzugsweise auf zwei nicht gezeigten Lagern gelagert ist, und welche mit der Welle des Generators 13 gekoppelt ist. Die beiden Brennkammern 4, 8 nehmen den intermediären Raum zwischen den Strömungsmaschinen 1, 6, 10 ein; sie sind vorzugsweise als Ringbrennkammern ausgebildet, wobei die HD-Brennkammer 4 in axialer Richtung weitgehend dem Verdichter 1 übergelagert ist, dergestalt, dass damit die Kompaktheit der Gasturbogruppe gesteigert wird. Diese Möglichkeit lässt sich bei der ND-Brennkammer 8 aus strömungstechnischen Ueberlegungen nicht gleichwertig anwenden; immerhin ist hier zu sagen, dass die ND-Brennkammer 8 sehr kurz ausfällt, so dass die strömungstechnischen Aspekte hier Vorrang erhalten.

In Fig. 2 ist eine Regelmethode für eine Gasturbogruppe gemäss Fig. 1 dargestellt. Darin bedeuten:
- X: Last in %
- Y: Temperaturen in °C/1000
- A: Eintrittstemperatur HD-Turbine
- B: Eintrittstemperatur ND-Turbine
- C: Leitschaufel-Verstellung
- D: Austrittstemperatur ND-Turbine
- E: Massenstrom

Bei einer Ausgangslage mit einer Last von 100% gemäss Abszisse X, welche einer Nominal-Temperatur am Eintritt zu den beiden Turbinen, HD-Turbine (Kurve A) und ND-Turbine (Kurve B), von ca. 1250°C entspricht, werden die Temperaturen der Heissgase gleichzeitig um ca. 20°C zurückgenommen, womit die Last dann ca. 97% der Nennlast entspricht. Mit dieser Massnahme wird eine Ausgangslage geschaffen, welche gegen negative Einflüsse durch die Regelung auf die Eintritts-Temperaturen in die beiden Turbinen gerichtet ist. Eine daraus entstehende Ueberschwingung kann hiermit aufgefangen werden. Die genannte Reduktion von ca. 20°C leitet sich von der maximal zugrundegelegten Temperatur der Abgase aus der ND-Turbine von 640°C ab, die nunmehr noch 620°C beträgt. Diese Temperatur darf zunächst weder erhöht noch beliebig abgesenkt werden, denn dies würde beispielsweise die Nachschaltung eines Dampfkreislaufes in Frage stellen oder die technische Auslegung der Gasturbogruppe gefährden. Soweit diese Temperaturen zurückgenommen worden sind, tritt die Verstellung der Verdichter-Laufschaufeln in Aktion, wie dies Kurve C zeigt. Während dieser Verstellung wird die Temperatur am Eintritt der HD-Turbine konstant gehalten, wie der weitere Verlauf der Kurve A aufzeigt. Die sukzessive Verstellung der Verdichter-Leitschaufeln gemäss Kurve C wird bis zu einer Last von 40% gefahren. Dabei nimmt die Eintritts-Temperatur in die ND-Turbine gemäss Kurve B ab, dergestalt, dass diese bei 40% Last noch ca. 1100°C beträgt. Demgegenüber haltet sich die Austritts-Temperatur aus der ND-Turbine gemäss Kurve D konstant. Mit der Verstellung der Verdichter-Leitschaufeln gemäss Kurve C nimmt der Massenstrom gemäss Kurve E kontinuierlich ab. Damit sich der neue Regelungsstand aus den bis anhin beschriebenen Eingriffen einstellen kann, müssen folgerichtig die Brennstoffmengen in die einzelnen Brennkammern, jeweils stromauf der beiden Turbinen, entsprechend der Reduzierung des Massenstromes zurückgenommen werden. Ab 40% Last nach unten findet keine weitere Verstellung der Verdichter-Leitschaufeln mehr statt, wie die Kurve C zeigt: Bei diesem Lastbereich sind die Leitschaufeln auch auf Anschlag, dementsprechend findet auch keine weitere Reduktion des Massenstrom E mehr statt. Die Eintritts-Temperatur A in die HD-Turbine bleibt weiterhin konstant, und dies bis zu einem Lastbereich von ca. 25%, d.h. bis zu dieser Last verharrt diese Eintritts-Temperatur auf hohem Niveau, nämlich 20°C tiefer als dies die Temperatur bei 100%iger Last wäre. Durch weitere Absenkung der Brennstoffmenge für die Brennkammer stromauf der ND-Turbine wird deren Eintritts-Temperatur weiter reduziert. Die Brennstoffmenge zur zweiten Brennkammer wird auf Null zurückgenommen. Ab 25% Last brennt nur noch die erste Brennkammer. Von Stillstand der Gasturbine bis auf etwa 25% Last eird die Gasturbine nur mit der ersten Brennkammer, also mit der HD-Brennkammer betrieben. Die Inbetriebnahme der Gasturbogruppe gestaltet sich als reziproke Fahrweise zu der beschriebenen Regelmethode.

Da die stromauf der ND-Turbine wirkende Brennkammer auf Selbstzündung ausgelegt ist, wird aus Betriebssicherheit eine redundante Temperaturmessung eingebaut, welche dahingehend ausgelegt ist, dass diese am Ausgang der HD-Turbine vorgenommen wird. Eine entsprechende Korrektur der Brennstoffmenge für die unmittelbar stromauf wirkende Brennkammer wird nach Bedarf eingeleitet.

Wird die beschriebene Gasturbogruppe mit einem Dampfkreislauf ergänzt, so ist primär von Wichtigkeit, dass die Temperatur am Ausgang der ND-Turbine möglichst bis zu den untersten Lastbereichen auf 620°C verharrt, damit die Bildung von Dampf zum Betrieb einer Dampfturbine möglichst lange aufrechterhalten werden kann. Die beschriebene Regelmethode ist hierzu geradezu prädestiniert, wird doch die Austritts-Temperatur von 620°C aus der ND-Turbine bis zu einer Last von 40% gehalten, wie dies aus Kurve D hervorgeht.

### Bezugszeichenliste

- 1: Verdichtereinheit, Verdichter
- 2: Angesaugte Luft
- 3: Verdichtete Luft
- 4: Erste Brennkammer, HD-Brennkammer
- 5: Heissgasen aus der HD-Brennkammer
- 6: Erste Turbine, HD-Turbine
- 7: Abgase aus HD-Turbine
- 8: Zweite Brennkammer, ND-Brennkammer
- 9: Heissgasen aus der ND-Brennkammer
- 10: Zweite Turbine, ND-Turbine
- 11: Rauchgase
- 12: Welle
- 13: Generator
- X: Abszisse = Last in %
- Y: Ordinate = Temperatur in °C/1000
- A: Temperatur vor HD-Turbine
- B: Temperatur vor ND-Turbine
- C: Verstellbarkeit der Verdichter-Leitschaufeln
- D: Temperatur am Austritt der ND-Turbine
- E: Massenstrom

## Patentansprüche

1. Verfahren zum Betrieb einer Gasturbogruppe« wobei die Gasturbogruppe im wesentlichen aus einer Verdichtereinheit, aus einer ersten der Verdichtereinheit nachgeschalteten Brennkammer, deren Heissgase eine erste. Turbine beaufschlagen, einer der ersten Turbine nachgeschalteten zweiten Brennkammer, deren Heissgase eine zweite Turbine beaufschlagen und aus mindestens einem Generator besteht, **dadurch gekennzeichnet, dass** bei Erstellung eines Teillastbetriebes eine Absenkung der Eintritts-Temperaturen in die beiden Turbinen (6, 10) bis zu einer 5%igen Reduktion der Nennlast vorgenommen wird, dass anschliessend eine Verstellung der Verdichter-Leitschaufeln stattfindet, bis die Last unter 50% fällt, dass während der Verstellung der Verdichter-Laufschaufeln die Eintritts-Temperatur in die erste Turbine (6) konstant gehalten wird, während die Eintritts-Temperatur in die zweite Turbine (10) abgesenkt wird, dergestalt, dass die Austritts-Temperatur der zweiten Turbine (10) nicht über den ausgelegten Nennwert steigt, und dass die weitere Absenkung der Eintritts-Temperaturen in die Turbinen (6, 10) nach Beendigung der Verstellung der Verdichter-Leitschaufeln zunächst bei der zweiten Turbine (10) und danach bei der ersten Turbine (6) vorgenommen wird.

2. Verfahren nach Anspruch 1, **dadurch gekennzeichnet, dass** die Absenkung der Temperatur vor der zweiten Turbine (10) während der Verstellung der Verdichter-Leitschaufeln dergestalt geschieht, dass die Austritts-Temperatur aus dieser zweiten Turbine (10) 620°C nicht übersteigt.

3. Verfahren nach Anspruch 1, **dadurch gekennzeichnet, dass** die zweite Brennkammer (10) auf Selbstzündung operiert.

4. Verfahren nach den Anspruchen 1 und 3, **dadurch gekennzeichnet, dass** die für die Selbstzündung in der zweiten Brennkammer (10) massgebende Temperatur durch eine Temperaturmessung am Ausgang der ersten Turbine (6) überwacht und korrigiert wird.

5. Verfahren nach Anspruch 1, **dadurch gekennzeichnet, dass** die Gasturbogruppe in Wirkverbindung mit einem nachgeschalteten Dampfkreislauf steht, dass nach abschliessender Verstellung der Verdichter-Leitschaufeln die weitere Absenkung der Last durch eine Vorwärmung der Ansaugluftuft (2) vor dem Verdichter (2) unter Zuhilfenahme einer Dampfmenge aus dem Dampfkreislauf vorgenommen wird.

## Claims

1. Method of operating a gas-turbine group, the gas-turbine group essentially comprising a compressor unit, a first combustion chamber which is arranged downstream of the compressor unit and the hot gases of which act upon a first turbine, a second combustion chamber which is arranged downstream of the first turbine and the hot gases of which act upon a second turbine, and at least one generator, **characterized in that**, when providing a partial-load operation, lowering of the inlet temperatures at the two turbines (6, 10) is carried out down to a 5% reduction in the rated load, **in that** an adjustment of the compressor guide blades then takes place until the load drops below 50%, **in that** the inlet temperature at the first turbine (6) is kept constant during the adjustment of the compressor moving [sic] blades, while the inlet temperature at the second turbine (10) is lowered in. such a way that the outlet temperature of the second turbine (10) does not exceed the rated nominal value, and **in that** the further lowering of the inlet temperatures at the turbines (6, 10) after the adjustment of the compressor guide blades is complete is carried out first of all at the second turbine (10) and then at the first turbine (6).

2. Method according to Claim 1, **characterized in that** the lowering of the temperature before the second turbine (10) during the adjustment of the compressor guide blades takes place in such a way that the outlet temperature at this second turbine (10) does not exceed 620°C.

3. Method according to Claim 1, **characterized in that** the second combustion chamber (10) [sic] operates with self-ignition.

4. Method according to Claims 1 and 3, **characterized in that** the temperature decisive for the self-ignition in the second combustion chamber (10) [sic] is monitored and corrected by a temperature measurement at the outlet of the first turbine (6).

5. Method according to Claim 1, **characterized in that** the gas-turbine group is in operative connection with a steam circuit arranged downstream, **characterized in that**, after final adjustment of the compressor guide blades, the further lowering of the load is carried out by preheating of the intake air (2) before the compressor (2) with the aid of a quantity of steam from the steam circuit.

## Revendications

1. Procédé pour la marche d'un turbogroupe à gaz, dans lequel le turbogroupe à gaz se compose essentiellement d'une unité de compresseurs, d'une première chambre de combustion disposée à la suite de l'unité de compresseurs, dont les gaz chauds alimentent une première turbine, d'une seconde chambre de combustion disposée à la suite de la première turbine, dont les gaz chauds alimentent une seconde turbine, et d'au moins un générateur, **caractérisé en ce que**, lors de l'établissement d'une marche à charge partielle, on opère une diminution des températures d'entrée dans les deux turbines (6, 10) jusqu'à une réduction de 5 % de la charge nominale, **en ce que** l'on procède ensuite à un réglage des aubes directrices du compresseur jusqu'à ce que la charge tombe en dessous de 50 %, **en ce que**, pendant le réglage des aubes directrices du compresseur, on maintient constante la température d'entrée dans la première turbine (6), tandis que l'on abaisse la température d'entrée dans la seconde turbine (10), de telle manière que la température de sortie de la seconde turbine (10) n'augmente pas au-delà de la valeur nominale de calcul, et **en ce que** l'on opère la diminution supplémentaire des températures d'entrée dans les turbines (6, 10) après la fin du réglage des aubes directrices du compresseur d'abord dans la seconde turbine (10) et ensuite dans la première turbine (6).

2. Procédé suivant la revendication 1, **caractérisé en ce que** la diminution de la température avant la seconde turbine (10) pendant le réglage des aubes directrices du compresseur se produit de telle manière que la température de sortie de cette seconde turbine (10) ne dépasse pas 620°C.

3. Procédé suivant la revendication 1, **caractérisé en ce que** la seconde chambre de combustion (10) fonctionne en allumage spontané.

4. Procédé suivant les revendications 1 et 3, **caractérisé en ce que** la température déterminante pour l'allumage spontané dans la seconde chambre de combustion (10) est surveillée et corrigée par une mesure de la température à la sortie de la première turbine (6).

5. Procédé suivant la revendication 1, **caractérisé en ce que** le turbogroupe à gaz se trouve en liaison active avec un circuit de vapeur disposé à la suite, **en ce qu'**après la fin du réglage des aubes directrices du compresseur, la diminution supplémentaire de la charge est effectuée par un préchauffage de l'air d'admission (2) avant le compresseur (2) à l'aide d'un débit de vapeur prélevé dans le circuit de vapeur.
